Europäisches Patentamt

(19) European Patent Office

Office européen des brevets

(11) **EP 0 900 135 B1**

(12) **EUROPEAN PATENT SPECIFICATION**

(45) Date of publication and mention
of the grant of the patent:
**29.11.2000 Bulletin 2000/48**

(51) Int Cl.[7]: **B29C 45/72**, B29C 49/64

(21) Application number: **97908188.2**

(86) International application number:
**PCT/EP97/01142**

(22) Date of filing: **06.03.1997**

(87) International publication number:
**WO 97/39874 (30.10.1997 Gazette 1997/46)**

(54) **IMPROVEMENT IN THE METHOD AND PLANT FOR MANUFACTURING THERMOPLASTIC-RESIN PARISONS**

VERBESSERUNG AN VERFAHREN UND ANLAGE ZUR HERSTELLUNG VON THERMOPLASTISCHEN VORFORMLINGEN

AMELIORATIONS APPORTEES A UN PROCEDE ET A UNE INSTALLATION DE FABRICATION D'EBAUCHES DE RESINE THERMOPLASTIQUE

(84) Designated Contracting States:
**DE ES FR GB GR IT NL PT SE**

(30) Priority: **18.04.1996 IT PN960025**

(43) Date of publication of application:
**10.03.1999 Bulletin 1999/10**

(73) Proprietor: **SIPA S.p.A.**
**I-31029 Vittorio Veneto (IT)**

(72) Inventors:
• **BAREL, Moreno**
**I-31025 S. Lucia di Piave (IT)**
• **BELLOTTO, Franco**
**I-31014 Colle Umberto (IT)**

(74) Representative: **Giugni, Valter et al**
**PROPRIA**
**Protezione Proprietà Industriale S.r.L.**
**Via Mazzini 13**
**33170 Pordenone (IT)**

(56) References cited:
**EP-A- 0 071 258**          **EP-A- 0 481 868**

• **PATENT ABSTRACTS OF JAPAN vol. 17, no. 607 (M-1507), 9 November 1993 & JP 05 185493 A (NISSEI ASB MACH CO LTD), 27 July 1993,**
• **PATENT ABSTRACTS OF JAPAN vol. 6, no. 196 (M-161), 5 October 1982 & JP 57 103821 A (AOKI KATASHI), 28 June 1982,**

**Description**

The present invention refers to a method and a plant adapted to the production on an industrial scale of containers of thermoplastic resin, particularly polyethylene terephtalate (PET) and polypropylene (PP) intended for filling with liquids that may also be at a high temperature and/or carbonated, ie. containing $CO_2$ gas (carbon dioxide).

In the field embracing the technology and the machines for manufacturing such containers there are a number of developments and improvements aimed at obtaining production processes and related apparatuses that are capable of producing said containers in an increasingly reliable, cost-effective, versatile manner, to an increasing level of quality, in a highly competitive industrial context of very large-scale production.

These production processes are generally known to be capable of being schematically grouped into two basic typologies, ie. single-stage and two-stage processes. The present invention applies to parisons obtained with both such types of processes, as well as the same respective plants.

Single-stage processes are so defined in that they are capable of forming the so-called preform, or parison, and transferring said parison from the injection mould or extrusion die (upon it having been cooled down to some appropriate temperature) to a conditioning station, where it is allowed to uniformly level at a temperature of preferred molecular orientation. Said preform or parison is then transferred to a blow-moulding mould, in which it is finally moulded into its desired form.

Inherent to any single-stage process is the fact that an uneven heat distribution takes place across the cross-section area of the wall thickness of the parison when the latter is transferred from the injection mould or extrusion die. Various processes have been patented concerning the times and the temperatures of the parison when this is removed from the injection mould, in view of optimizing the related cycle times.

Two-stage processes are so defined due to the fact that the blow-moulded bottle is obtained in two distinct phases which may be carried out even at quite great intervals between each other. In fact, the actual advantage of this technology derives exactly from the circumstance that the whole process is divided into two phases that are normally carried out wide apart from each other in terms of both space and time, thereby ensuring greater flexibility from a technical, manufacturing and marketing point of view.

The individual parisons are produced in the first phase of the above process, wherein said parisons are then usually stored in situ or transported to the premises of the final user or processor.

In the second phase of the above process, the parisons are then re-conditioned to the desired temperature and, immediately thereafter, blow-moulded into the desired final products, ie. the bottles.

In addition to such a greater flexibility, two-stage processes potentially enable also considerable economies of scale to be obtained, since a single manufacturer is able to produce, in a single and same plant, the parisons that can then be used to produce various different types of bottles.

However, two-stage processes have a major inherent drawback in their greater energy usage due to the fact that, in the second phase or stage thereof, the parisons must be fully re-conditioned, ie. heated to the optimum temperature required for the subsequent blow moulding operation.

In both said single-stage and two-stage processes and plants for the production of hollow plastic products, typically bottles, parisons are obtained through continuous extrusion of a flow of thermoplastic resin, in particular polyethylene terephtalate (PET), into a plurality of multiple moulds. However, the actual production of a parison is not independent from the manner in which the same is going to be blow moulded, as well as the manner in which the resulting bottle is going to be used, but must on the contrary take due account of a number of such variables as mainly the degree of orientation of the parison and the productivity, or output capability, of the plant.

While the injection process tends to induce a certain orientation in the parison, it is quite difficult for the actual degree and type of such an orientation to be controlled, so that this is carried out under the most favourable conditions of temperature distribution.

The control of the orientation is commonly known to largely depend on the temperature of the parison immediately before such an orientation. It is further a commonly known practice to control such a temperature by placing the parison in an ambient at controlled temperature for a given period of time, said method being commonly known as "conditioning treatment" by all those skilled in the art, so that it will not be dealt with any further in this context.

When removed from the injection mould, the parison is relatively cold and it shall be at an appropriate temperature in view of the subsequent phases of stretch-blow moulding.

Therefore, for the parison to reach the desired extent of robustness, it shall be cooled down and, for a single-stage process, this minimum cooling time represents a limit below which there would arise problems in connection with the removal of the parison from the mould.

The parison moulding process is commonly known to include for distinct phases, the sequence of which follows the order given below:

    1) mechanical injection-mould clamping phase,

2) resin injection phase,
3) after-pressure holding phase,
4) cooling phase.

While the first three phases are rigid, in the sense that they call for well-defined and rigorously established times and other process parameters to be complied with in order to produce the moulded part, the cooling phase actually determines the temperature at which the parison is ejected from the injection mould.

The longer the cooling time, the lower will of course the temperature of the parison be when this is ejected from the mould. Conversely, if such a cooling phase is too short, it may occur that the temperature of the parison is so high as to cause problems to arise in the phase of ejection of the part from the injection mould.

Such a cooling time is commonly known to be the by far longest one among the times implied by the various operations that must be carried out in order to obtain the finished product, including the same conditioning and actual blow moulding operations and the related part handling times.

As a result, since the various processing phases must synchronize on the same cycle time ($T_C$), which is determined by the duration of the longest operation, it ensues that the moulding phase actually determines the minimum cycle time that cannot be reduced any further owing to the above cited technical reasons.

The possible and desirable shortening of the time during which the parison must dwell in the injection mould sets such a mould free and available for the next moulding phase, so that it correspondingly shortens such a moulding phase and therefore, according to what has been stated above, reduces the cycle time and increases the productivity of the whole plant.

It should furthermore be also considered that the latest developments concerning the reduction in the basic weight of the bottles have led to increased stretching ratios and, as a result, increased thicknesses of the parison by an order of approx. 10 to 15% in the case of containers intended to hold low-to-medium carbonated liquids, and 15 to 20% in the case of containers for highly carbonated liquids.

This has also brought about an increase in the machine cycle, especially as far as bottle formats for liquids with high $CO_2$ contents are concerned, although this phenomenon has recently been mitigated by developments introduced in the conditioning stations, as disclosed in the Italian patent application no. PN95A000048 filed by the same Applicant.

Since the cycle time of a single-stage machine is dictated by the time needed by the parison to reach a certain temperature profile at the end of the moulding phase, it mainly depends on the thickness of the parison and is approximately given by the following equation:

$$\text{Cycle time} = 12 \times (\text{parison thickness in mm}/3.429)^2 + 3,$$

where 3 is the mechanical time of the injection mould in seconds.

For example, if an average 2-liter bottle is considered, the thickness of the parison increases from 3.9 to 4.6 mm when changing from low-carbonated liquids to high-carbonated ones.

Going on with the above example, for the same stretching ratio the cycle time for two parisons having an average thickness of 3.9 and 4.6 mm would respectively be as follows:

$$\text{Cycle time (3.9)} = 12 \times (3.9/3.429)^2 + 3 = 18.5 \text{ sec.}$$

with a weight of the bottle of 52 gr., and

$$\text{Cycle time (4.6)} = 12 \times (4.6/3.429)^2 + 3 = 24.6 \text{ sec.}$$

with a weight of the bottle of 45.5 gr.

The increase in cycle time would therefore amount to approx. 33%. However, by reducing the weight by 15% and increasing the stretching ratios from 10 to 15, the same cycle time, for 4.6-mm parisons, comes actually down from 24.6 to approx. 20 seconds, thereby saving approx. 5 seconds.

In any case, notwithstanding such a balancing of the stretching ratios (which represents the actual advantage of single-stage processes over two-stage ones), the machine cycle time will always exceed by more than 10% the comparable time with traditional weight and stretching ratios.

The opportunity therefore emerges of a reduction in the machine cycle times while maintaining traditional weights and stretching ratios.

In view of improving the productivity of the machine, a solution, disclosed in the US patent 4,382,905 to Emery Valyi, has been proposed which teaches to remove the parison from the injection mould when the temperature of its inner surface decreases below the point which corresponds to the highest crystallization degree of the particular resin, to remove the parison from the mould even when the same parison has not yet reached a uniform temperature distribution pattern, and before it reaches an average temperature which is suitable for orientation, and to quickly transfer the parison to a holding mould situated between the injection mould and the conditioning mould, so that the heat content of the parison is able to continue to evolve, until an average temperature suitable for orientation is eventually reached. In the above cited patent specification, the holding mould is kept at a holding temperature which is substantially lower than the temperature of the inner surface of the parison.

The above cited Valyi patent has however a number of quite apparent drawbacks which can be summarized as follows:

- the injection moulds are cooled rapidly; this, however, causes the molten resin to solidify in a quite unsatisfactory, poorly uniform manner, so that also the parison, which should on the contrary be kept under as uniform conditions as possible, will basically lack uniformity, not to mention the inherent difficulties in rapidly cooling down the injection moulds themselves;

- the holding moulds are neither heat conditioned nor temperature controlled, so that, during operation, they can reach randomly variable temperature values, thereby putting the whole process entirely out of control, due to the orientation and stretching properties of the parison being greatly dependent on the temperature thereof.

Such drawbacks, which are both of a constructional nature and process-related, have practically hitherto prevented processes and plants of the above cited type from being implemented in practice.

In a process of production of plastic containers it is known, from Japan 05 185493 and Japan 57 103821 A to extract the preforms from the injection molds and to put them into proper respective cavities where said preforms are cooled down in so-called "temperature controlling pot 50" or "a temperature adjusting pot 2...".-
However these cavities (pot) show the specific target to operate basically as temperature conditioning stations, as they are soon followed by the blowing moulds.
So being things, said pots do not offer any significant advantage in the reduction of injection times and therefore of cyle-time, as it is well known that the injection phase is the longest one; as a matter of fact said pots do gather in one same item (the pot) the functions of preform cooling and temperature conditioning, said functions being only partially apt to be overlapped, as well known.
Therefore the overall injection time does determine the duration of the cycle-time, and said overall injection time doesn't change even if a part of said time (the cooling phase) is carried out picking up the preform from the relevant injection molds and putting them into proper cooling and temperature conditioning pots.

Correspondingly, it is therefore a main purpose of the present invention to provide:

a) a single-stage or two-stage method for manufacturing parisons of thermally stable thermoplastic resin, wherein the phase in which the resin is injected and then cooled down to the desired solidification temperature is obtained by transferring, in the second part of said phase, the parisons into appropriate cooling cups, which are adapted to cool down the outer surface of the same parisons to the desired temperature through the contact of these parisons with the inner surface of said cups, while the inner volume of said parisons is set under pressure so that the resulting outward deformation thereof ensures, and holds for the desired period of time, such a contact at the desired pressure;

b) a single-stage or two-stage plant adapted to carry out the above described method.

These and further purposes of the present invention will be readily and clearly understood by those skilled in the art from the reading and comprehension of the description given below.

Further embodiments of the invention are defined in the dependent Claims.

A non-limiting example of the invention is described and illustrated in detail below with reference to the accompanying drawings and table, in which:

- Figure 1 is a schematical view of the sequence of the stations and phases for producing a parison and a bottle according to the present invention;

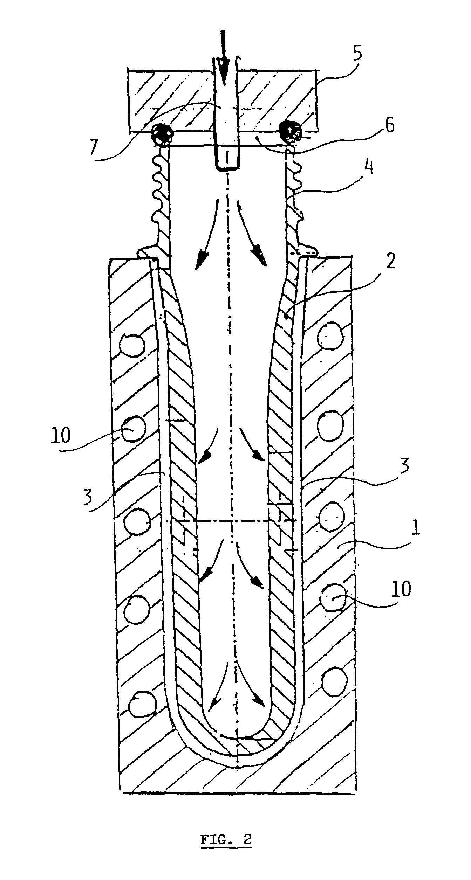

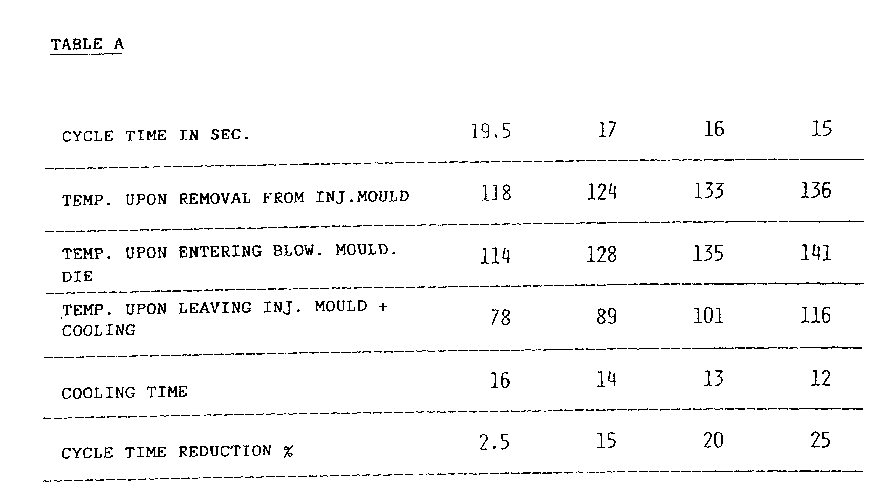

- Figure 2 is a cross-sectional view of a cup accomodating a parison in accordance with the present invention;

- Table A indicates, in the different subsequent positions of the parison in the various phases and stages of the manufacturing process, the surface temperature detected as a function of the selected cycle time;

- Figure 3 is a diagrammatic view showing the curves of the outer temperatures of a same parison according to different cycle times selected, said curves representing graphically the values indicated in Table A;

- Figure 4 is a diagrammatic view showing the curves of the temperatures of the outer surface of a parison according to the various moulding phases in which the same parison is dwelling, for different temperatures of the parison when removed from the injection mould cycle times selected.

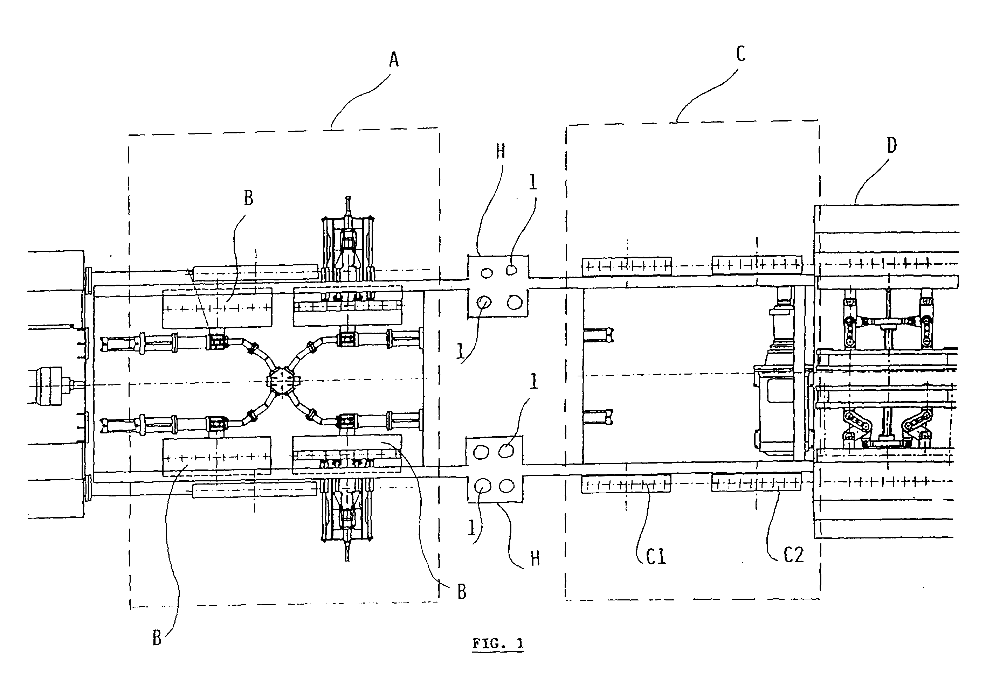

Referring in particular to Figure 1, it can be noticed that the stations of a single-stage according to the invention comprise the station A in which the parisons are extruded and injection moulded in appropriate multicavity moulds B, a conditioning station C (which includes a heating station C1 and a temperature stabilizing station C2), a blow moulding station D, and the additional cool-down station H, which is the subject covered by the present invention, switched in between the injection moulding station A and the conditioning station C.

The cool-down station H comprises a plurality of cooling cups 1, in which the parison 2 is temporarily introduced, said cups having their inner walls 3 so shaped as to be able to conform to most of the outer surface of the respective parison they are accomodating. The neck portion 4 of the parison remains outside said cups and is not cooled down.

Such a station is further provided with closing means 5, which are pressure actuated to allow for a greater closing and opening speed, adapted to be applied on to the mouth 6 of the parison.

Each one of said closing means is provided internally with a through-hole 7 to allow for gas under pressure to be insufflated into the cavity of the parison and to be held the for the desired length of time, which usually amounts to just a few seconds.

The operation of the apparatus is as follows: at the beginning, the parison 2, which has been just removed from its injection-moulding mould, is introduced in the cooling cup 1 in which it settles down, as this is shown in the afore cited Figure; immediately thereafter, the closing means 5 is let down on to the mouth 6 of the parison and gas under pressure, which may also simply consists of compressed air, is let thereinto through the through-hole 7.

Owing to the inner gas pressure, which is set to a value situated anywhere within a pressure range from 2 to 4 bar in view of obtaining the best overall results, and taking advantage of the elasticity of the parison which is not yet fully hardened, the cylindrical wall thereof is expanded by such an extent as needed for the outer surface thereof to establish a tight contact with the inner surface 3 of the cup. Since the cup is cold, it rapidly cools down, by means of conduction, also said rather hot outer surface of the just injection-moulded parison, thereby carrying out and completing the required process of rapidly cooling down the parison in a span of time in which the parison is out of the respective injection mould, so that the latter is already available for moulding another parison, ie. performing a subsequent cycle.

It will of course be appreciated that the means used to handle the parisons in the process, as well as the afore cited means for closing and opening the mouths of the parisons and insufflating the compressed gas thereinto, are well within the capability of anyone skilled in the art, so that they shall not be dealt here any further, not even by way of example.

Preferably, in order to be able to still better and more effectively control the temperature of such cups and, above all, to prevent the same cup to heat up to any excessive extent, it appears appropriate for them to equally undergo some form of forced cooling. To this purpose, it is therefore appropriate to provide a plurality of cooling channels 10 housed in the solid structure of said cups, said cooling channels being run through by a flow of appropriate media, which may be simply water, the temperature of which can be controlled and kept at a pre-determined level so that the temperature of the inner surface 3 of the respective cup is able to reach the value needed to bring about the pre-set temperature drop in the respective parison.

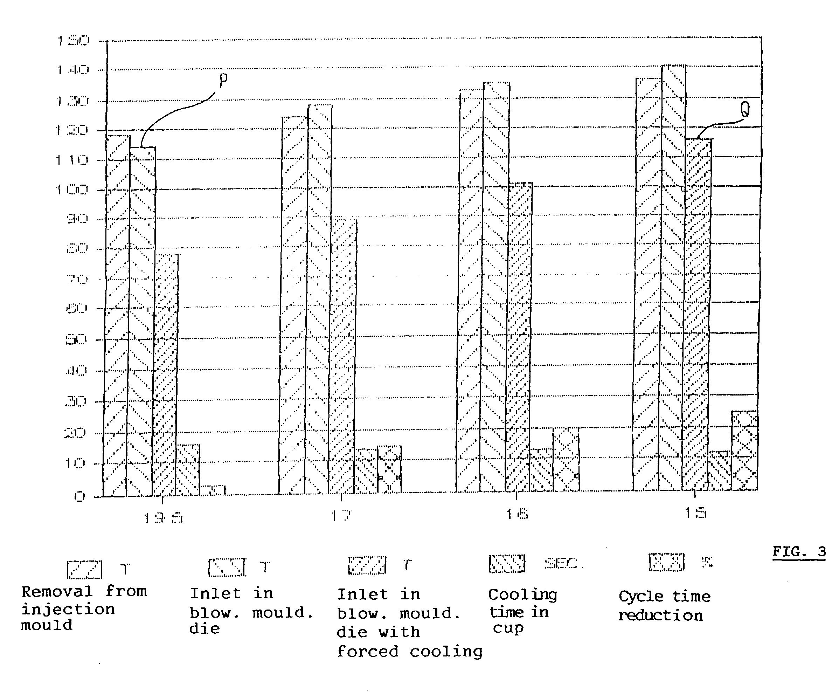

The results of the invention can be verified in a variety of manners. A first manner can be referred to Figure 3 which shows on its ordinate four sets of parameters (outer temperature, times, %) of a same test parison for four respective cycle times, said four sets of data referring respectively to the four data columns of Table A, starting from the second line thereof, in which the same results, obtained with a typical parison made of AKZO D04 300 material, weighing 34 gr. and having an average wall thickness of 4.6 mm, are set forth in tabular form.

From the results that have been measured, and the diagram that has been plotted on the basis thereof, it can be noticed that the optimum blow moulding temperature of 114°C with a cycle time of 19.5 sec. under traditional conditions, as indicated by the point "P", is substantially reached by the point "Q" (at 116°C) with a cycle time of only 15 sec. by cooling down the parison externally for a time of approx. 12 sec. in accordance with the teachings of the present invention.

Theoretically, therefore, the reduction in cycle time, when the temperature measurements made with thermal camera are assumed to be correct, is indicated to amount to 25%, since it changes from approx. 20 seconds in the traditional process down to 15 seconds in the method according to the present invention.

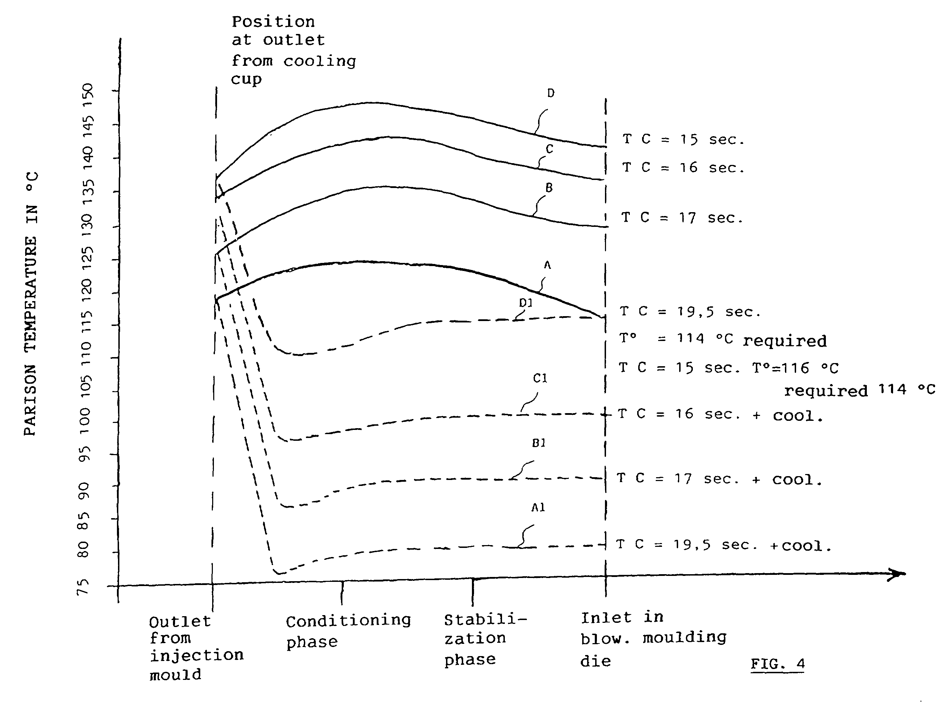

Referring now to Figure 4, this can be seen to illustrate the effect of the invention on the thermal behaviour of the parison. In fact, the four curves A, B, C and D represent the evolution of the temperature of the surface of the parison in the various processing phases for four different temperatures, ie. 118°C, 124°C, 133°C and 136°C, respectively, at which the same parison is removed from the injection mould.

On the contrary, the dashed lines A1, B1, C1 and D1 show the corresponding evolution of the temperature of the parison when the latter is subjected to forced cooling according to the present invention.

The optimum temperature at which the parison should enter the blow moulding tool in the last process phase can be assumed to lie at 115°C. From the curves in the diagram it clearly appears that, when the initial temperature of removal from the injection mould is increased, the final temperature will proportionally deviate from the desired temperature of 115°C.

The described invention, by producing a forced, rapid cooling down of the parison, causes the temperature thereof to lower in a much quicker manner, as indicated by the curves in the diagrams, with respect to the traditional methods, thereby giving the practical possibility for the parison to be removed from the injection mould even at higher temperatures, eg. 136°C in the given example, since the subsequent rapid, forced cooling action will bring them down to the ideal final value of 116°C, ie. a value which is very close to the optimum one of 114°C required for the blow moulding phase.

And it is just such a higher mould removal temperature that enables the parison to actually dwell for a shorter time in the same injection mould, and this again enables the process cycle time to be reduced and, conclusively, the productivity of the whole plant to be boosted.

**Claims**

1.  Single-stage or two-stage method for manufacturing parisons (2) of oriented thermoplastic resin, particularly adapted to be subsequently blow moulded into bottles or similar hollow bodies of plastic material, comprising the phases of:

    -   injection of molten resin into a plurality of multicavity moulds (A),

    -   solidification of the respective parisons (2) obtained in each cavity of said multicavity moulds, until the inner temperature decreases to the temperature that corresponds to the highest degree of crystallization of the particular thermoplastic resin used,

    -   removal of the parisons (2) from the injection mould and transfer thereof into appropriate rapid-cooling cups (1) before the same parisons reach an average temperature which is suitable for orientation,

    -   the cooling of the parisons (2) in the respective cooling cups occurs by closing the mouth (6) of the parison after the introduction thereof in the respective cup (1), letting gas under pressure into the cavity of the parison so as to enable the outer surface thereof to enter into contact with and to conform to the inner surface (3) of the respective cup for a pre-determined time, said cooling cups (1) being cooled by media flowing in channels contained in the solid portion of said cups,

        **characterized in that** the dwelling time of the parison (2) in the cup is equal to the machine cycle time minus the time taken for the parison to be removed from the respective injection mould as increased by the time needed to transfer said parison from the injection mould to the respective cooling cup.

2.  Method according to claim 1, **characterized in that** the the dwelling time of the parisons during the pressurization phase in the respective cooling cups is situated between 10 and 15 seconds.

3.  Method according to claim 1 or 2, **characterized in that** the pressurizing gas is kept in the interior of the cavity of the parison at a substantially constant pressure comprised between 2 and 4 bar.

4.  Plant for for manufacturing parisons of oriented thermoplastic resin, particularly adapted to be subsequently blow moulded into bottles or similar hollow bodies of plastic material, comprising:

    -   a plurality of multicavity injection moulds (A) into which molten resin capable of solidifying and forming into a plurality of respective parisons (2) is injected sequentially,

- a plurality of cooling cups (1) adapted to accomodate said parisons upon removal thereof from said multicavity injection moulds (A),

- transfer means adapted to transfer said parisons (2) from said multicavity injection moulds to the respective cooling cups,

- means adapted to insufflate and keep, for a definite period of time, gas under pressure in the cavity of the respective parisons (2) upon the transfer thereof into the respective cooling cups,

    **characterized in that** said cooling cups are provided in a cooling station (H) arranged between the injection station (A), which comprises said multicavity injection moulds (B), and the conditioning station (C).

5. Plant according to claim 4 wherein said cooling cups are cooled by media circulated in appropriate channels (10) provided in the solid portion of the body containing said cups (1),
    **characterized in that** said circulating cooling media are kept at a temperature in the range between 8 and 12°C.


**Patentansprüche**

1. Einstufiges oder zweistufiges Verfahren zum Herstellen von Vorformlingen (2) aus orientiertem Thermoplastharz, die sich besonders für das anschließende Blasformen zu Flaschen oder ähnlichen Hohlkörpern aus Kunststoffmaterial eignen, das die folgenden Phasen umfasst:

   - Spritzgießen von geschmolzenem Harz in eine Vielzahl von Mehrfachwerkzeugen (A),

   - Verfestigen der entsprechenden Vorformlinge (2), die in jedem Hohlraum der Mehrfachwerkzeuge hergestellt wurden, bis die Innentemperatur auf die Temperatur abgesunken ist, die dem höchsten Grad der Kristallisation des speziellen eingesetzten Thermoplastharzes entspricht,

   - Entnehmen der Vorformlinge (2) aus dem Spritzgießwerkzeug und Überführen derselben in geeignete Schnellabkühl-Mulden (1), bevor die Vorformlinge eine durchschnittliche Temperatur erreichen, die zur Orientierung geeignet ist,

   - wobei das Abkühlen der Vorformlinge (2) in den entsprechenden Abkühlmulden ausgeführt wird, indem die Öffnung (6) des Vorformlings verschlossen wird, nachdem er in die entsprechende Mulde (1) eingeführt worden ist, indem Gas unter Druck in den Hohlraum des Vorformlings eingelassen wird, so dass die Außenfläche desselben über eine vorgegebene Zeit mit der Innenfläche (3) der entsprechenden Mulde in Kontakt kommen und sich an sie anpassen kann,

   **dadurch gekennzeichnet**, dass die Verweilzeit des Vorformlings (2) in der Mulde der Maschinenzykluszeit abzüglich der Zeit, die zum Entnehmen des Vorformlings aus dem entsprechenden Spritzgießwerkzeug erforderlich ist, um die Zeit verlängert entspricht, die notwendig ist, um den Vorformling aus dem Spritzgießwerkzeug in die entsprechende Abkühlmulde zu überführen.

2. Verfahren nach Anspruch 1, **dadurch gekennzeichnet**, dass die Verweilzeit der Vorformlinge während der Druckphase in den entsprechenden Abkühlmulden zwischen 10 und 15 Sekunden liegt.

3. Verfahren nach Anspruch 1 oder 2, **dadurch gekennzeichnet**, dass das Druckgas im Inneren des Hohlraums des Vorformlings auf im Wesentlichen konstantem Druck gehalten wird, der zwischen 2 und 4 bar liegt.

4. Anlage zum Herstellen von Vorformlingen aus orientiertem Thermoplastharz, die sich besonders für das anschließende Blasformen zu Flaschen oder ähnlichen Hohlkörpern aus Kunststoffmaterial eignen, die umfasst:

   - eine Vielzahl von Mehrfach-Spritzgießwerkzeugen (A), in die geschmolzenes Harz, das sich verfestigen und zu einer Vielzahl entsprechender Vorformlinge (2) formen kann, nacheinander eingespritzt wird,

   - eine Vielzahl von Abkühlmulden (1), die die Vorformlinge nach der Entnahme derselben aus den Mehrfach-Spritzgießwerkzeugen (1) aufnehmen,

- Überführungseinrichtungen, die die Vorformlinge (2) aus den Mehrfach-Spritzgießwerkzeugen in die entsprechenden Abkühlmulden überführen,

- Einrichtungen, mit denen über einen vorgegebenen Zeitraum unter Druck stehendes Gas in den Hohlraum der entsprechenden Vorformlinge (2) eingeblasen und gehalten wird, nachdem diese in die entsprechenden Kühlmulden überführt worden sind,

**dadurch gekennzeichnet**, dass die Abkühlmulden in einer Abkühlstation (H) vorhanden sind, die zwischen der Einspritzstation (A), die die Mehrfach-Spritzgießwerkzeuge umfasst, und der Konditionierstation (C) angeordnet ist.

5. Anlage nach Anspruch 4, wobei die Abkühlmulden durch Medien abgekühlt werden, die in entsprechenden Kanälen (10) zirkulieren, die in dem massiven Abschnitt des Körpers vorhanden sind, der die Mulden (1) enthält, **dadurch gekennzeichnet**, dass die zirkulierenden Kühlmedien auf einer Temperatur im Bereich zwischen 8 und 12°C gehalten werden.

**Revendications**

1. Procédé en une étape ou deux étapes pour fabriquer des paraisons (2) en résine thermoplastique orientée, particulièrement adaptées pour être ensuite moulées par soufflage en bouteilles ou corps creux semblables de matière plastique, comprenant les phases de :

   - injection d'une résine fondue dans plusieurs moules à plusieurs cavités (A),
   - solidification des paraisons (2) respectives obtenues dans chaque cavité desdits moules à plusieurs cavités, jusqu'à ce que la température interne diminue jusqu'à la température qui correspond au degré de cristallisation le plus élevé de la résine thermoplastique particulière utilisée,
   - démoulage des paraisons (2) du moule d'injection et transfert de celles-ci dans des coupes de refroidissement rapide (1) appropriées avant que ces mêmes paraisons n'atteignent une température moyenne qui convient pour l'orientation,
   - le refroidissement des paraisons (2) dans les coupes de refroidissement respectives est effectué en fermant l'ouverture (6) de la paraison après avoir introduit celle-ci dans la coupe (1) respective, en introduisant du gaz sous pression dans la cavité de la paraison de façon à permettre à la surface externe de celle-ci d'entrer en contact avec la surface interne (3) de la coupe respective et d'épouser celle-ci pendant un temps prédéterminé, lesdites coupes de refroidissement (1) étant refroidies par des milieux s'écoulant dans des canaux contenus dans la partie solide desdites coupes,

   caractérisé en ce que le temps de séjour de la paraison (2) dans la coupe est égal au temps de cycle de la machine moins le temps pris pour démouler la paraison du moule d'injection respectif, augmenté du temps nécessaire pour transférer ladite paraison depuis le moule d'injection jusqu'à la coupe de refroidissement respective.

2. Procédé selon la revendication 1, caractérisé en ce que le temps de séjour des paraisons pendant la phase de mise sous pression dans les coupes de refroidissement respectives se situe entre 10 et 15 secondes.

3. Procédé selon la revendication 1 ou 2, caractérisé en ce que le gaz sous pression est maintenu à l'intérieur de la cavité de la paraison à une pression pratiquement constante comprise entre 2 et 4 bars.

4. Installation pour fabriquer des paraisons en résine thermoplastique orientée, particulièrement adaptées pour être ensuite moulées par soufflage en bouteilles ou corps creux semblables de matière plastique, comprenant :

   - plusieurs moules d'injection à plusieurs cavités (A) dans lesquels une résine fondue apte à se solidifier et être façonnée en plusieurs paraisons (2) respectives est séquentiellement injectée,
   - plusieurs coupes de refroidissement (1) adaptées pour recevoir lesdites paraisons lors du démoulage de celles-ci desdits moules d'injection à plusieurs cavités (A),
   - des moyens de transfert adaptés pour transférer lesdites paraisons (2) depuis lesdits moules d'injection à plusieurs cavités jusqu'aux coupes de refroidissement respectives,

- des moyens adaptés pour insuffler et maintenir, pendant une durée définie, un gaz sous pression dans la cavité des paraisons (2) respectives après avoir transféré celles-ci dans les coupes de refroidissement respectives,

caractérisée en ce que lesdites coupes de refroidissement sont disposées dans un poste de refroidissement (H) disposé entre la station d'injection (A), qui comprend lesdits moules d'injection à plusieurs cavités (B), et le poste de conditionnement (C).

5. Installation selon la revendication 4, dans laquelle lesdites coupes de refroidissement sont refroidies par des milieux circulant dans des canaux appropriés (10) prévus dans la partie solide du corps contenant lesdites coupes (1), caractérisée en ce que lesdits milieux de refroidissement circulant sont maintenus à une température dans la gamme entre 8 et 12 °C.

EP 0 900 135 B1

FIG. 1

10

FIG. 2

TABLE A

| | | | | |
|---|---|---|---|---|
| CYCLE TIME IN SEC. | 19.5 | 17 | 16 | 15 |
| TEMP. UPON REMOVAL FROM INJ.MOULD | 118 | 124 | 133 | 136 |
| TEMP. UPON ENTERING BLOW. MOULD. DIE | 114 | 128 | 135 | 141 |
| TEMP. UPON LEAVING INJ. MOULD + COOLING | 78 | 89 | 101 | 116 |
| COOLING TIME | 16 | 14 | 13 | 12 |
| CYCLE TIME REDUCTION % | 2.5 | 15 | 20 | 25 |

EP 0 900 135 B1

FIG. 3

| ⬚ T | ⬚ T | ⬚ T | ⬚ SEC. | ⬚ % |
|---|---|---|---|---|
| Removal from injection mould | Inlet in blow. mould. die | Inlet in blow. mould. die with forced cooling | Cooling time in cup | Cycle time reduction |

EP 0 900 135 B1

FIG. 4